# EUROPÄISCHE PATENTSCHRIFT

(11) **EP 3 156 646 B1**
(45) Veröffentlichungstag und Bekanntmachung des Hinweises auf die Patenterteilung: **16.05.2018**
(21) Anmeldenummer: 15190145.1
(22) Anmeldetag: 16.10.2015
(51) Int. Cl.: F03D 7/02, F03D 7/04

(54) **WINDENERGIEANLAGE MIT EINEM DREHZAHL- UND EINEM GENERATORREGLER**
WIND FARM FACILITY WITH A SPEED REGULATOR AND A GENERATOR REGULATOR
ÉOLIENNE DOTEE D'UN REGULATEUR D'ALTERNATEUR ET DE VITESSE

(43) Veröffentlichungstag der Anmeldung: 19.04.2017
(73) Patentinhaber: Nordex Energy GmbH, 22419 Hamburg (DE)
(72) Erfinder: Drossel, Detlef, 22851 Norderstedt (DE); Bode, Florian, 22339 Hamburg (DE)
(74) Vertreter: Hauck Patentanwaltspartnerschaft mbB

(56) Entgegenhaltungen:
- DE-A1-102008 010 543
- DE-A1-102014 000 784
- GB-A- 2 476 316
- US-A1- 2003 151 259
- GUO PENG: "Nonlinear feed forward pitch controller for wind turbine based on rotor's aerodynamic characteristic", MACHINE LEARNING AND CYBERNETICS (ICMLC), 2010 INTERNATIONAL CONFERENCE ON, IEEE, PISCATAWAY, NJ, USA, 11. Juli 2010 (2010-07-11), Seiten 879-883, XP031759688, ISBN: 978-1-4244-6526-2

## Beschreibung

Die vorliegende Erfindung betrifft eine Windenergieanlage mit einem Drehzahlregler, der aus einer Regeldifferenz in der Drehzahl eine Steuergröße für eine Pitchsteuerung generiert und einem Generatorregler, der den Generator, abhängig von einer Drehzahl und einem Leistungssollwert, ansteuert. Bei der Generatoransteuerung wird je nach Konfiguration von Generator und Umrichter auch die Ansteuerung des Generators durch den Umrichter als eine Generatorsteuerung aufgefasst.

Aus EP 1 946 436 B1 ist ein Stromwandler bekannt, bei dem zwischen einem Gleichrichter und einem Wechselrichter ein Gleichstromzwischenkreis vorgesehen ist, dessen Spannungsniveau entsprechend einem Leistungsbedarf und einem Spannungsbedarfssignal geregelt wird.

Aus EP 2 317 134 A2 ist ein Verfahren und eine Vorrichtung zur Leistungserzeugung in einer Windenergieanlage bekannt geworden, bei dem eine Störgrößenvorsteuerung zur Dämpfung von Stromschwingungen bei Schaltvorgängen vorgesehen ist.

Aus US 2013/0148393 A1 ist ein Verfahren zur Ansteuerung eines Leistungswandlers bekannt, bei dem für einen Einbruch der Netzspannung (low voltage ride through LVRT) oder einen Zusammenbruch der Netzspannung (zero voltage ride through ZVRT) vorgesehen ist, ein Vorsteuerspannungssignal zur Bestimmung eines Spannungssollwerts anzusteuern.

Aus WO 2015/078478 A1 ist eine Windenergieanlage bekannt, die eine Vorsteuerung des Blatteinstellwinkels abhängig von einer Änderungsrate einer externen Referenz aufweist. Die Vorsteuerung dient dazu, Leistungsdellen (power dips) bei einem schnellen Anstieg der eingespeisten Leistung zu vermeiden.

Bei bekannten Windenergieanlagen und Windparks kommt es bei einer vorgegebenen Änderung der Leistungsbegrenzung, beispielsweise durch die Windparksteuerung oder bei einem Anfahren einer Windenergieanlage stets zu Situationen, in denen die Leistung nicht ausreichend schnell ansteigt. Ferner tritt ein Überschwingen und ein Unterschwingen der Drehzahl und der Leistung auf, wodurch einzelne Windenergieanlagen einer erhöhten Belastung ausgesetzt sind. Aus US2003/0151259 ist eine Windenergieanlage gemäss dem Oberbegriff von Anspruch 1 bekannt. Der Erfindung liegt die Aufgabe zugrunde, eine Windenergieanlage bereitzustellen, die einen geforderten Leistungsanstieg ohne große mechanische Belastung schnell durchführen kann.

Erfindungsgemäß wird die Aufgabe durch eine Windenergieanlage mit den Merkmalen aus Anspruch 1 gelöst. Vorteilhafte Ausgestaltungen bilden den Gegenstand der Unteransprüche.

Die erfindungsgemäße Windenergieanlage besitzt einen Rotor, der mindestens ein über eine Pitchsteuerung um seine Längsachse verstellbares Rotorblatt aufweist und einen von dem Rotor angetriebenen Generator besitzt. Für den Betrieb der Windenergieanlage ist ein Drehzahlregler vorgesehen, der aus einer Regeldifferenz in der Drehzahl eine Steuergröße für die Pitchsteuerung generiert. Ferner ist ein Generatorregler vorgesehen, der den Generator, abhängig von der Drehzahl und einem Leistungssollwert, ansteuert. Die Ansteuerung des Generators kann beispielsweise über einen Umrichter erfolgen. Drehzahlregler und Generatorregler sind nicht notwendig als getrennte Bauteile oder Baugruppen ausgebildet, sondern können auch Bestandteil oder Komponente eines Reglers sein. Erfindungsgemäß ist eine Vorsteuerung vorgesehen, an der ein Leistungsleitwert als Eingangsgröße anliegt und die eine Steuergröße für die Pitchsteuerung als Ausgangsgröße ausgibt, wobei die ausgegebene Steuergröße für die Pitchsteuerung die Ausgangsgröße eines Drehzahlreglers vorsteuert. Die Vorsteuerung erfolgt über eine inverse Regelstrecke, die ein Leistungsdrehmoment aus dem Drehzahlsollwert und dem Leistungssollwert sowie ein Beschleunigungsdrehmoment aus der zeitlichen Änderung des Drehzahlsollwerts bestimmt. Die Vorsteuerung der Ausgangsgröße des Drehzahlreglers bewirkt, dass eine Steuergröße für die Pitchsteuerung abhängig von einem Leistungsleitwert gesteuert wird und der Drehzahlregler nicht in die Umsetzung des Leistungsleitwerts eingreift.

In einer bevorzugten Ausgestaltung bestimmt die Vorsteuerung aus dem Leistungsleitwert einen Leistungssollwert und/oder einen Drehzahlsollwert. Bei der Bestimmung der Sollwerte aus dem Leistungsleitwert kann beispielsweise auf anlagenspezifische Rampen zurückgegriffen werden, über die ein sich sprunghaft ändernder Leitwert in einen sich langsam und/oder stetig ändernden Sollwert umgewandelt wird.

In einer bevorzugten Ausgestaltung ist die Vorsteuerung derart ausgelegt, dass die von dem Rotor aufgenommene Leistung mindestens für den Leistungssollwert und für eine Beschleunigung des Triebstrangs ausreicht. Der Vorteil der Vorsteuerung einer Steuergröße für die Pitchsteuerung liegt darin, dass der Drehzahlregler nur wenig oder gar nicht eingreifen muss, so dass ein Überschwingen in Drehzahl und Leistung vermieden werden kann, ebenso wie starke mechanische Belastungen der Windenergieanlage.

In einer bevorzugten Ausgestaltung ist die Steuergröße der Pitchsteuerung eine Verstellgeschwindigkeit für den Blatteinstellwinkel. Die über die Zeit integrierte Verstellgeschwindigkeit ergibt den Winkelwert des Blatteinstellwinkels. Auch kann die Steuergröße der Pitchsteuerung ein Verstellwinkel sein, der in Form eines Winkelinkrements oder auch als ein absoluter Winkelwert vorliegt.

Ein Ausführungsbeispiel des erfindungsgemäßen Verfahrens wird nachfolgend näher erläutert. Es zeigen:
- Fig. 1: eine Übersicht von Regler, Steuerung und Regelstrecke,
- Fig. 2: die Bestimmung von Leistungssollwert, Drehzahlsollwert und Steuergröße für die Pitchsteuerung, wobei die Vorsteuerung über eine inverse Strecke erfolgt,
- Fig. 3: eine beispielhafte Vorsteuerung mit einem Streckenmodell und
- Fig. 4: einen zeitlichen Verlauf des Drehmoments und die zeitliche Entwicklung der Ableitung des Drehmoments nach der Zeit.

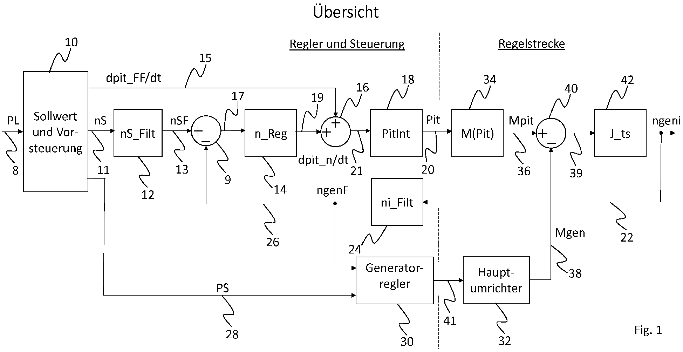

Fig. 1 zeigt eine Übersicht mit Regler und Steuerung. Ein Leistungsleitwert PL 8, bei dem es sich um einen von einem Netzbetreiber vorgegebenen Wert handeln kann, ist Eingangsgröße an einem Block Sollwert und Vorsteuerung 10. Über entsprechende Rampen, die beispielsweise eine maximale Leistungsänderung der Windenergieanlage vorgeben, kann aus dem Leistungsleitwert PL 8 ein Leistungssollwert PS 28 bestimmt werden, wobei beide Größen die maximale Solleistung der Windenergieanlage darstellen. Ebenfalls wird eine Solldrehzahl nS 11 durch den Block Sollwert und Vorsteuerung 10 erzeugt. Weiterhin wird durch den Block Sollwert und Vorsteuerung 10 eine Steuergröße für die Pitchsteuerung dpit_FF/dt 15 erzeugt. Hierbei handelt es sich um die zeitliche Änderung des Blatteinstellwinkels, wobei hier kein Sollwert vorgegeben wird, sondern der Wert zur Vorsteuerung. Über einen Filter nS_Filt 12 wird die Solldrehzahl nS 11 gefiltert, wobei hierdurch Phasenverschiebungen aus der Drehzahlfilterung, aus einem Pitchantrieb und weiteren Verzögerungen in der Regelstrecke kompensiert werden. Die gefilterte Solldrehzahl nSF 13 wird an einem Subtraktionsglied 9 mit einer gefilterten Generatordrehzahl ngenF 26 zusammengeführt und als Regeldifferenz 17 an einen Drehzahlregler n_Reg 14 angelegt. Der Drehzahlregler n_Reg 14 rechnet die Regeldifferenz in eine Pitchgeschwindigkeit dpit_n/dt 19 um. Der Drehzahlregler gleicht Störungen, wie beispielsweise eine schwankende Windgeschwindigkeit, durch die Vorgabe einer Pitchgeschwindigkeit aus. Die so ermittelte Pitchgeschwindigkeit dpit_n/dt 19 sowie die Steuergröße für die Pitchsteuerung dpit_FF/dt 15 werden in einem Additionsglied 16 addiert und die Summe 21 an einen Integrator PitInt 18 angelegt. Ausgangssignal des Integrators PitInt 18 ist der an der Windenergieanlage einzustellende Pitchwinkel Pit 20. Ein Istwert derGeneratordrehzahl ngeni 22 wird an der Windenergieanlage bestimmt und in einem Filter ni_Filt 24 gefiltert, um eine gefilterte Ist-Generatordrehzahl ngenF 26 zu erreichen. Die gefilterte Generatordrehzahl ngenF 26 liegt zusammen mit dem Leistungssollwert PS 28an einem Generatorregler 30 an, der über das Ausgangssignal 41 den Hauptumrichter 32 der Windenergieanlage ansteuert.

Um regelungstechnisch eine Steuergröße für die Pitchsteuerung dpit_FF/dt 15 als Steuersignal zur Vorsteuerung ermitteln zu können, ist es hilfreich, sich die Zusammenhänge in der Regelstrecke zu vergegenwärtigen. In dem Block M(Pit) 34 wird der anliegende Sollwert für den Pitchwinkel Pit 20 für den Blatteinstellwinkel gewandelt, woraus sich über den Ist-Pitchwinkel das dazugehörige Rotordrehmoment Mpit 36 ergibt. Das Rotordrehmoment Mpit 36 treibt den Triebstrang der Windenergieanlage an und ein sich aus der Ansteuerung des Hauptumrichters 32 ergebendes Generatordrehmoment Mgen 38 bremst diesen.

Daher wird für ein resultierendes Drehmoment 39 in einem Subtraktionsglied 40 die Differenz gebildet. Das resultierende Drehmoment 39 wirkt über das Trägheitsmoment des Triebstrangs J_ts 42, um den Istwert der Generatordrehzahl ngeni 22 zu erzeugen. Dabei gilt der bekannte Zusammenhang n = 60 * M/(2 * Pi * J_ts).

Bei der in Fig. 1 dargestellten Übersicht mit Regler und Steuerung wird eine Änderung der Pitchgeschwindigkeit in Abhängigkeit des Leistungsleitwerts PL 8 beschrieben. Es handelt sich um eine Vorsteuerung, bei der ein Gleichgewicht der über den Rotor aufgenommenen Leistung und der Generatorleistung plus Leistung zum Beschleunigen des Triebstrangs angestrebt wird. Da über die Leistungskennlinie der gewünschte Zusammenhang von Leistung und Drehzahl vorgegeben ist, kann die Pitchgeschwindigkeit über die Vorsteuerung so gesteuert werden, dass der Rotor so viel Leistung aufnimmt, wie für Beschleunigung und Generatorleistung notwendig ist. Bei einer richtig eingestellten Vorsteuerung im Block Sollwert und Vorsteuerung 10 und konstanten Betriebsbedingungen, greift der Drehzahlregler n_Reg 14 so gut wie nicht ein und starke mechanische Belastungen, Überschwinger und andere mechanisch belastende Umstände für die Windenergieanlage werden vermieden.

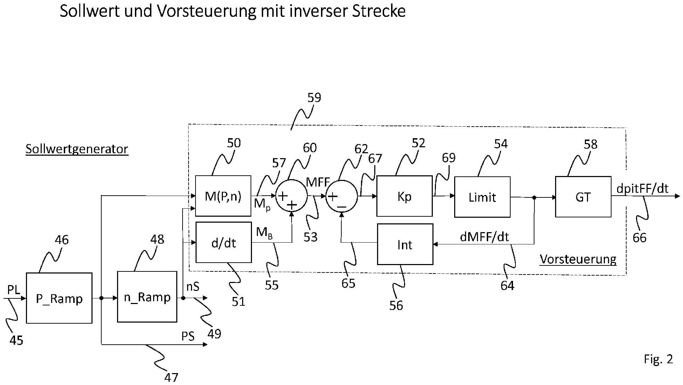

Fig. 2 zeigt eine erfindungsgemäße Ausführung, bei der über eine inverse Regelstrecke die Vorsteuerung erfolgt. Fig. 2 zeigt mithin eine Ausgestaltung der Sollwertbildung und Vorsteuerung gemäß Block 10 aus Fig. 1. Wie in Fig. 2 dargestellt, wird der anliegende Leistungsleitwert PL 45 zunächst über eine Rampenfunktion P-Ramp 46 in einen Leistungssollwert PS 47 umgerechnet. Über eine weitere nachgeschaltete Drehzahlrampe n_Ramp 48 wird der Leistungsleitwert PL 45 in eine Solldrehzahl nS 49 umgerechnet. Die Solldrehzahl nS 49 liegt zusammen mit dem Leistungssollwert PS 47 an einem Vorsteuerblock 59 an. In der Vorsteuerung 59 wird eine Pitchgeschwindigkeit berechnet, die die Ist-Leistung an die Sollleistung und die Ist-Drehzahl an die Solldrehzahl anpasst. Die Vorsteuerung 59 ermittelt in einem Block M(P, n) 50 aus dem Leistungssollwert PS 47 und der Solldrehzahl nS 49, das auf der Leistung beruhende Drehmoment M_{P} 57. Über die Ableitung d/dt 51 der Solldrehzahl nS 49 wird die Änderung der Drehzahl in der Windenergieanlage berücksichtigt und das auf der Beschleunigung beruhende Drehmoment M_{B} 55 berechnet. Die Summe von Drehmoment aus Leistung M_{P} 57 und Drehmoment aus Beschleunigung M_{B} 55 wird als vorgesteuertes Gesamtdrehmoment MFF 53 in der Vorsteuerung 59 weiterverarbeitet. Das vorgesteuerte Gesamtdrehmoment MFF 53 wird über einen Verstärkungsblock Kp 52 und einen Begrenzungsblock Limit 54 abgeleitet, wobei der abgeleitete Wert dMFF/dt 64 über einen Integratorblock 56 als Signal 65 zurück zu einem Subtraktionsglied 62 geführt wird. Die Vorsteuerung 59 berücksichtigt über die vorgenommene Ableitung auch das Verhalten der Windenergieanlage. Die Ableitungsfunktion, bestehend aus den Blöcken 52, 54, 56 und 62 hat den Vorteil, dass Limitierungen der Pitchgeschwindigkeit aus dem Block Limit 54 berücksichtigt werden können und das Integral aus dMFF/dt 64 dem Wert MFF 53 entspricht. Die zeitliche Änderung des vorgesteuerten Gesamtdrehmoments wird über eine nichtlineare Gaintuning-Funktion GT 58 in die zeitliche Ableitung des vorgesteuerten Pitchwinkels dpitFF/dt 66 umgewandelt. Hierbei berechnet dpitFF/dt 66 sich als die zeitliche Ableitung des vorgesteuerten Blatteinstellwinkels aus der Soll-Drehmomentänderung dMFF/dt 64.

In den Blöcken 52, 54, 56 und 62 wird das Drehmoment abgeleitet zu "dMFF/dt". Durch die Verstärkung Kp 52 wird das dynamische Einschwingverhalten der Rückkopplungsschleife festgelegt. Im Block Limit 54 wird der Ausgangswert in der Höhe begrenzt. Dies ist nötig weil der Pitchantrieb auch einer Geschwindigkeitsbegrenzung unterliegt. Der rückgekoppelte Integrator Int 56 integriert wieder ein Drehmoment auf, das vom Drehmoment MFF 53 subtrahiert wird. Durch diesen Aufbau wird die Ableitung des Drehmoments und damit des Pitchwinkels in der Größe begrenzt. Gleichzeitig ist sichergestellt, dass das Integral von dMFF/dt trotz Begrenzung am Ende "MFF" entspricht, bzw. der gesamte Vorsteuer-Pitchwinkel verfahren wird. Ein einfaches Ableiten und anschließendes Begrenzen würde den Vorsteuer-Pitchwinkel zu früh stoppen.

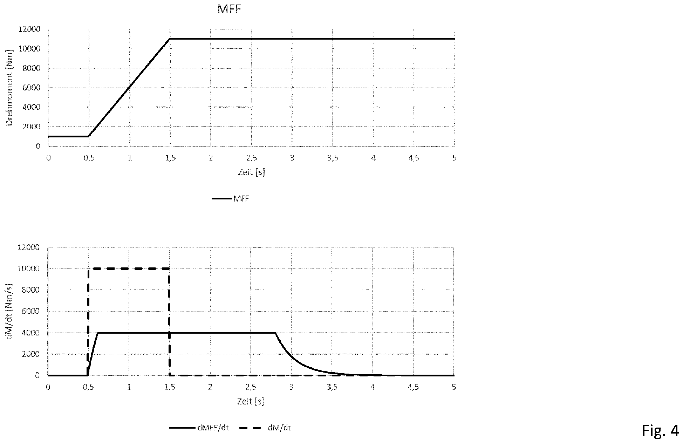

In Fig. 4 ist dies zu sehen: Kp=4, Limit=4000, Anstieg MFF von 1000Nm auf 11000Nm. Die Größe dMFF/dt ist auf 4000Nm begrenzt. Unter ihrer Kurve befindet sich die Fläche von 10000Nm. Hingegen ist dM/dt nicht begrenzt. Der Pitchantrieb könnte nicht schnell genug folgen. Wäre dM/dt auf 4000Nm begrenzt, wäre die Fläche unter der Kurve zu klein und die Pitchwinkel würde nicht ausreichend weit verfahren.

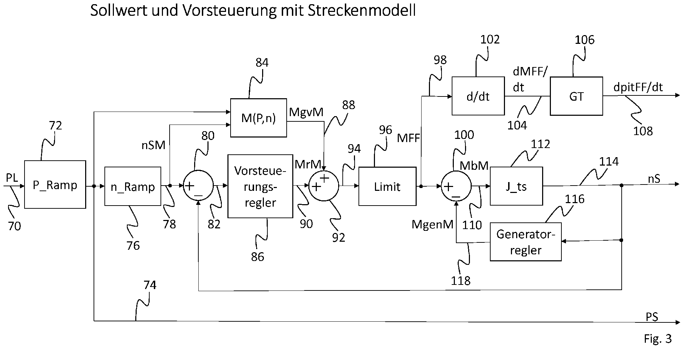

Fig. 3 zeigt beispielhaft ein Streckenmodell, um die vorgesteuerte Änderungsrate zu realisieren. Wiederum wird mit einer Rampenfunktion P_Ramp 72 aus dem Leistungsleitwert PL 70 ein Leistungssollwert PS 74 ermittelt. Über die Drehzahlrampe n_Ramp 76 wird ein Soll-Drehzahlmodellwert nSM 78 ermittelt. Über einen Vorsteuerungsregler 86 für das Modell wird ein Reglerdrehmoment MrM 90 bestimmt. Das modellierte Generatordrehmoment MgvM 88 wird über den Leistungssollwert PS 74 und den Soll-Drehzahlmodellwert nSM 78 in Block M(P, n) 84 bestimmt. Die Summe aus dem modellierten Generatordrehmoment MgvM 88 und dem Reglerdrehmoment MrM 90wird in einem Additionsglied 92 gebildet und liegt als Signal 94 an einem Begrenzer Limit 96 an. Der Begrenzer Limit 96 berücksichtigt den tatsächlichen Aufbau der Windenergieanlage und erzeugt das vorgesteuerte Gesamtdrehmoment MFF 98. Das Gesamtdrehmoment MFF 98 wird in d/dt 102 abgeleitet und über eine Gaintuning-Funktion GT 106 in die vorgesteuerte Pitchwinkeländerungsgeschwindigkeit dpitFF/dt 108 umgewandelt.

Die hierzu passende Drehzahl nS 114 wird über das Trägheitsmoment J_ ts 112 des Triebstrangs bestimmt, wobei hier um nur ein modelliertes Beschleunigungsdrehmoment zu erhalten, über einen modellierten Generatorregler 116 ein modelliertes Generatordrehmoment MgenM 118 ermittelt wird. Hieraus ergibt sich dann der zu der Pitchwinkeländerungsgeschwindigkeit dpitFF/dt 108passende Drehzahlsollwert nS 114.

In diesem Entwurf wird ein Modell der Anlage (der Regelstrecke) verwendet. Es beinhaltet das Trägheitsmoment J_ ts 112 des Triebstrangs, die Regelung des Generatordrehmoments im Generatorregler 116 und alle relevanten Begrenzungen. Berücksichtigt sind z.B. die Begrenzung der Pitchgeschwindigkeit "dpitFF/dt" oder eine Begrenzung der vom Rotor erzeugten Drehmomentänderung "dMFF/dt", eine Begrenzung der Triebstrangdrehzahländerungsrate "dns/dt" und eine Begrenzung des Leistungsanstieges oder des Generatormomentenanstieges "dMgen_M/dt". Ist einer dieser Werte begrenzt, wird das Ausgangssignal MFF 98 des Begrenzers Limit 96 begrenzt. Ist das Signal 94 am Eingang der Begrenzung Limit 96 zu groß wird das Ausgangssignal MFF 98 so begrenzt, dass die Leistung und die Drehzahl in ihren Grenzen optimal ansteigen. Das Drehmoment des Rotors MFF 98 wird in d/dt 102 abgeleitet und über eine Gaintuning-Funktion in Block GT 106 in die Vorsteuer- Pitchgeschwindigkeit dpitFF/dt 108 umgerechnet. Da die Drehzahl nS 114 im Modell auf dem gleichen Drehmoment MFF 98 beruht wie die Vorsteuer-Pitchgeschwindigkeit dpitFF/dt 108, wird sie als Soll-Drehzahl für den Drehzahlregler der realen Anlage genutzt.

Für die Erzeugung des Signals 94 am Eingang des Begrenzers Limit 96 sind mehrere Lösungen möglich. Hier wird ein Regler vorgeschlagen, der aus der Vorsteuer-Solldrehzahl nSM 78 und der Modell Drehzahl nS 114 einen Drehzahlfehler 82 berechnet. Aus diesem wird im Vorsteuerungsregler 86 das Moment MrM 90 berechnet. Viele Regelungsalgorithmen sind möglich. Zusätzlich wird aus der Sollleistung PS 74 und der Vorsteuer-Solldrehzahl nSM 78 das Vorsteuer-Generatormoment MgvM 88 gebildet. Die Summe beider Momente, die am Additionsglied 92 gebildet wird, wird als Signal 94 auf den Eingang des Begrenzers Limit 96 geführt.

## Patentansprüche

1. Windenergieanlage mit einem Rotor, der mindestens ein über eine Pitchsteuerung um seine Längsachse verstellbares Rotorblatt aufweist, und einem von dem Rotor angetriebenen Generator mit
- einem Drehzahlregler (n_Reg 14), der aus einer Regeldifferenz in der Drehzahl eine Steuergröße für die Pitchsteuerung generiert und
- einem Generatorregler (30), der aus einem Leistungsleitwert einen Drehzahlsollwert und einen Leistungssollwert bestimmt,
**dadurch gekennzeichnet, dass**
eine Vorsteuerung (10,59) vorgesehen ist, die über eine inverse Regelstrecke eine Steuergröße für die Pitchsteuerung bestimmt, wobei die inverse Regelstrecke ein Leistungsdrehmoment (Mp) aus dem Drehzahlsollwert und dem Leistungssollwert sowie ein Beschleunigungsdrehmoment (M_{B}) aus der zeitlichen Änderung des Drehzahlsollwerts bestimmt und die Steuergröße für die Pitchsteuerung als Ausgangsgröße ausgibt, die die Ausgangsgröße des Drehzahlreglers vorsteuert.

2. Windenergieanlage nach Anspruch 1, **dadurch gekennzeichnet, dass** die Vorsteuerung aus dem Leistungsleitwert einen Leistungssollwert und/oder einen Drehzahlsollwert bestimmt.

3. Windenergieanlage nach Anspruch 1 oder 2, **dadurch gekennzeichnet, dass** die Vorsteuerung derart ausgelegt ist, dass die von dem Rotor aufgenommene Leistung mindestens für ein Bereitstellen des Leistungssollwerts und für eine Beschleunigung des Triebstrangs ausreicht.

4. Windenergieanlage nach einem der Ansprüche 1 bis 3, **dadurch gekennzeichnet, dass** die Steuergröße der Pitchsteuerung der Verstellgeschwindigkeit für den Blatteinstellwinkel entspricht.

5. Windenergieanlage nach einem der Ansprüche 1 bis 4, **dadurch gekennzeichnet, dass** die die Steuergröße der Pitchsteuerung dem Verstellwinkel für den Blatteinstellwinkel entspricht.

6. Windenergieanlage nach einem der Ansprüche 1 bis 5, **dadurch gekennzeichnet, dass** zu der Summe aus Leistungsdrehmoment und Beschleunigungsdrehmoment eine zeitliche Änderungsrate bestimmt wird, die an einer Verstärkung anliegt, um die auszugebende Steuergröße für die Pitchsteuerung zu ermitteln.

## Claims

1. A wind turbine having a rotor, which has at least one rotor blade adjustable about its longitudinal axis by means of a pitch control, and a generator, driven by the rotor, having
- a speed regulator (n_Reg 14), which takes a control difference in the rotational speed and generates a control variable for the pitch control, and
- a generator regulator (30), which takes a power conductance and determines a rotational speed setpoint and a power setpoint,
wherein
a pilot control (10, 59) is provided that uses an inverse controlled system to determine a control variable for the pitch control, the inverse controlled system determining a power torque (Mp) from the rotational speed setpoint and the power setpoint and also an acceleration torque (M_{B}) from the change in the rotational speed setpoint over time and outputting the control variable for the pitch control as an output variable that provides pilot control for the output variable from the speed regulator.

2. The wind turbine as claimed in claim 1, wherein the pilot control takes the power conductance and determines a power setpoint and/or a rotational speed setpoint.

3. The wind turbine as claimed in claim 1 or 2, wherein the pilot control is designed such that the power drawn by the rotor is sufficient at least to provide the power setpoint and to accelerate the drive train.

4. The wind turbine as claimed in one of claims 1 to 3, wherein the control variable for the pitch control corresponds to the adjustment speed for the blade pitch angle.

5. The wind turbine as claimed in one of claims 1 to 4, wherein the control variable for the pitch control corresponds to the adjustment angle for the blade pitch angle.

6. The wind turbine as claimed in one of claims 1 to 5, wherein the sum of power torque and acceleration torque has a rate of change over time determined for it that is applied to a gain in order to ascertain the control variable to be output for the pitch control.

## Revendications

1. Éolienne dotée d'un rotor, qui comporte au moins une pale de rotor ajustable autour de son axe longitudinal par une commande de pas de pale, et d'un alternateur entraîné par le rotor, avec
• un régulateur de vitesse (n_Reg 14), qui génère une grandeur de commande pour la commande de pas de pale à partir d'une différence de réglage dans la vitesse de rotation,
• un régulateur d'alternateur (30), qui détermine une consigne de vitesse et une consigne de puissance à partir d'une valeur guide de puissance,
**caractérisée en ce que**
une commande pilote (10, 59) est prévue, qui détermine une grandeur pilote pour la commande de pas de pale au moyen d'un système réglé inverse, le système réglé inverse déterminant un couple de puissance (Mp) à partir de la consigne de vitesse et de la consigne de puissance, ainsi qu'une couple d'accélération (M_{B}) à partir du changement temporel de la consigne de vitesse, et émet la grandeur de commande pour la commande de pas de pale comme grandeur de sortie qui pré-commande la valeur de sortie du régulateur de vitesse.

2. Éolienne selon la revendication 1, **caractérisée en ce que** la pré-commande détermine une consigne de puissance et/ou une consigne de vitesse à partir de la valeur guide de puissance.

3. Éolienne selon la revendication 1 ou 2, **caractérisée en ce que** la pré-commande est dimensionnée tellement que la puissance consommée par le rotor est au moins suffisante pour l'approvisionnement de la consigne de puissance et pour une accélération de la ligne d'entraînement.

4. Éolienne selon une des revendications 1 à 3, **caractérisée en ce que** la grandeur de commande pour la commande de pas de pale est équivalente à la vitesse de réglage pour le pas des pales.

5. Éolienne selon une des revendications 1 à 4, **caractérisée en ce que** la grandeur de commande pour la commande de pas de pale est équivalente à l'angle de réglage pour le pas des pales.

6. Éolienne selon une des revendications 1 à 5, **caractérisée en ce que** un taux de variation temporel est déterminé de la somme du couple de puissance et du couple d'accélération et qui est appliqué à un dispositif d'amplification pour déterminer la grandeur de commande pour la commande de pas de pale qu'il faut émettre.
